# EUROPEAN PATENT APPLICATION

(11) **EP 4 831 844 A1**
(43) Date of publication of application: **28.10.2026**
(21) Application number: 25172218.7
(22) Date of filing: 24.04.2025
(51) Int. Cl.: G06F 21/32, G06F 21/60, H04L 9/40

(54) **COMPUTER-IMPLEMENTED METHOD FOR PROVIDING A SEAMLESS JOURNEY TO A TRAVELLER, ASSOCIATED SYSTEM, COMPUTER PROGRAM AND COMPUTER-READABLE MEDIUM**

(71) Applicant: Vision Box - Soluções De Visão Por Computador S.A., 2790-204 Carnaxide (PT)
(72) Inventor: FERREIRA, Pedro, 2650-437 Amadora (PT); BRITES, Hugo, 2790-488 Carnaxide (PT); CORREIA, João, 2735-130 Agualva-Cacém (PT)
(74) Representative: Samson & Partner Patentanwälte mbB

(57) **Abstract**

The present invention relates to a technological solution including a system and a computer-implemented method. The system comprises two main types of modules: an intermediate processor (10) and a connector, in particular, a first connector (111) and a second connector (211).

The first connector (111) and the second connector (211) are able to handle all the local communications to and from a origin IMP (11) and a destination IMP (21), as well as to ensure that the data to be shared with one or more locations is secured.

The intermediate processor (10) is tasked with having a single and centralized source of data, with regards to connectivity, commercial agreements, and each individual passenger's meta-data configuration.

The invention relates also to a computer-implemented method carried out by the system.

## Description

### TECHNICAL FIELD OF THE INVENTION

This disclosure relates to a solution providing a seamless journey to travellers, in particular the present invention relates to a computer-implemented method and system for enabling biometric configurations to be recognised between an origin identity management platform and a destination identity management platform.

### BACKGROUND OF THE INVENTION

Currently, the passenger transportation industry, although heavily regulated, presents challenges with regards to interoperability and connectivity between different players. If on one side this opened the door to multiple providers to develop different solutions that address the standardization, it also causes that each entity isolated itself and implementing different tools, from different providers. Taking biometric engines as an example, that although compliant with standards, two different engines will provide two distinct results for the same input parameters. For example, in an enrolment process of a traveller, the traveller information collected at the origin of his/her trip might not be exactly the same as the one required at the destination, which might have a different biometric engine, respective rules and thresholds, compared to that of the origin.

### SUMMARY OF THE INVENTION

The present invention pertains to a technological solution consisting of a computer-implemented method and system comprising two main types of modules: a connector, deployed locally into the journey locations, such as airports or border forces, for example, wherein at least two connectors are present in the invention implementation: one at the origin of a journey, the other one at a destination of that journey; and a centralized intermediate processor, also referred to as "hub", either throughout the patent application or in the figures, for the sake of space saving.
The connector is able to handle all the local communications to and from a local identity management provider, as well as to ensure that the data to be shared with one or more locations is secured.

The intermediate processor is tasked with having a single and centralized source of data, with regards to connectivity, commercial agreements, and each individual passenger's meta-data configuration. The intermediate processor does not have any information about each individual, that is, passenger wise, there is no information that can identify a passenger. The intermediate processor just contains a reference that an entity generated a message into the system, e.g., someone has enrolled using Iris scan, and travelled from Lisbon to Oporto on date dd/mm/YYYY.

Basically, the present solution allows traveller or passenger data to be shared between systems that benefit from traveller information, such as harbours, airports, border forces, etc.

From the traveller point of view, this sharing of data allows saving time, as one would no longer be required to repeat the same identification processes in multiple locations during their journey. This faster passenger journey also translates into a higher throughput within a given location, such as an airport.

In a first aspect, the present invention refers to a computer-implemented method for enabling biometric configurations to be recognised between an origin identity management platform and a destination identity management platform, providing a seamless journey to a traveller.

In a second aspect, the present invention relates to a system for enabling biometric configurations to be recognised between an origin identity management platform and a destination identity management platform providing a seamless journey to a traveller, which system implements the computer-implemented method according to the first aspect.

In a third aspect, the present invention relates to a computer program product containing instructions which, when executed by a computer of the system of the second aspect, performs method steps of the first aspect.

In a fourth aspect, the present invention relates to a computer-readable medium comprising the installation of the computer program product of the third aspect.

### TECHNICAL PROBLEM

An important topic that is to be taken into consideration when interconnecting different systems with different players and providers, is the complexity and maintainability of it. A traditional approach would drive into having all players connected with all other players. This represents a system that will not be able to scale, as whenever a new player wishes to enter the system, all previously existing players would have to be involved in the integration.

One of the issues identified in the problem statement is how challenging it would be if each party would have to manage individually all the connections to all other players in the system. If one adds the complexity of double cyphering and the need to ensure that the whole system is secure, the solution would be impossible to manage.

### SOLUTION TO TECHNICAL PROBLEM

The solution presented in this patent application addresses the interconnectivity challenges, by providing a common ground, that is an intermediate processor, that provides the required standardization between distinct parties and addresses the complexity issues.

The solution provided in the present patent application also aims at providing a seamless journey to travellers. The concept is to share, upon given consent, the relevant information about the passenger, so that the passenger is known in all parts of the journey, after having enrolled into the system according to the present invention at the origin.

The system according to the present invention comprises a connector deployed in each origin or destination, for example, in each airport, to establish communication with local Identity Management Providers, facilitating encryption and decryption of messages. Additionally, a central intermediate processor is incorporated to calculate metrics, store configurations, and serve as a centralized point for the exchange of encrypted passenger travel data and identification information using asymmetric ciphering between the origin and destination connectors.

This requires a connection to a local identity provider, a process to ensure secure data transfer between locations (data encryption and secure channels), a location that centralizes message metrics and a process to deliver such information to the destination.

The key for this seamless journey to come to reality, is to make the passenger data available in the destination.

The following presents advantages and a broad description of the modules comprised in the system, as well as the method steps associated thereof.

### ADVANTAGEOUS EFFECTS OF THE INVENTION

The technological solution provided by the present invention has several benefits. An important benefit of having an intermediate processor as a centralization unit is to promote the interoperability between different players. The existence of multiple players each with a different technological solution, places challenges to the interoperability between the players. By adding the connector to the solution that will normalize the data to a common standard, the solution reduces the challenges in the interoperability between different players.

The approach of having local connectors and a centralized intermediate processor also increases the overall system security, as described further in the security chapter.

These and other features and advantages of the invention will become apparent in the detailed description together with the following drawings.

### BRIEF DESCRIPTION OF THE FIGURES

Preferred embodiments of the present invention will be described with reference to the accompanying figures, which are to be construed as non-limiting the invention scope, which scope is defined by the appended claims.

Any subsequent changes or modifications of the inventive features illustrated herein, as well as any additional applications of the illustrated principles and embodiments of the invention, which would normally occur to a person skilled in the art in possession of this description, are considered to be within the scope of the claimed invention.
**Figure 1A** - schematically represents a connectivity diagram of the prior art and thus not making part of the present invention;
**Figure 1B** - schematically represents a connectivity diagram of an embodiment according to the present invention;
**Figure 2** - schematically represents a diagram of an embodiment of the system according to the present invention;
**Figure 3** - represents a diagram of an embodiment of the computer-implemented method according to the invention;
**Figure 4** - represents a flow chart of an embodiment of certain steps of the computer-implemented method according to the invention;
**Figure 5** - represents a flow chart of an embodiment of other steps of the computer-implemented method according to the invention;
**Figure 6** - represents a flow chart of an embodiment of yet other steps of the computer-implemented method according to the invention; and
**Figure 7** - represents flow charts of the messages status according to an embodiment of the present invention.

### DESCRIPTION OF EMBODIMENTS

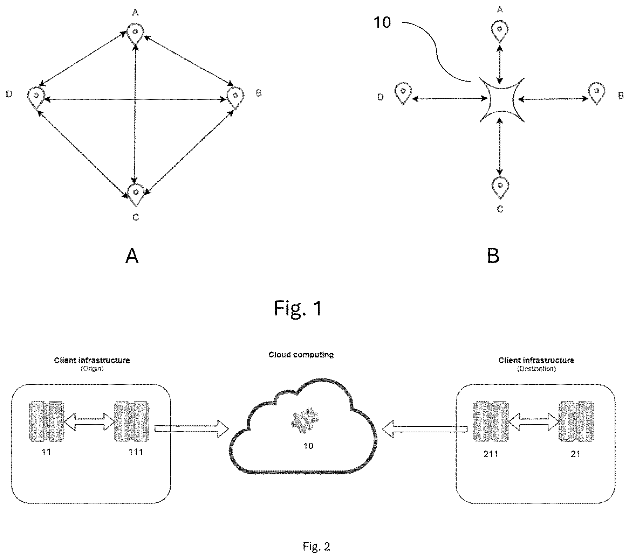

**Figure 1A** schematically represents a connectivity diagram of the complexity of connections in a system of the prior art, for a simple example with only four players. In the example depicted in Figure 1A, a total of [(N-1)×N]/2 connections are present. Each location A, B, C, D needs to manage a connection with each of the players in the system of the prior art.

By adding a centralization intermediate processor (10), as depicted in **Figure 1B****,** the number of connections is reduced to one per player, i.e., one single connection to the intermediate processor (10), and so four connections in a system with four players, that is, N connections in a system with N players.

When a new player is added, it is registered in the intermediate processor and immediately available to all other players, without the need to have any intervention by the pre-existing parties. All the other players become also available to this new member who just joined. Therefore, the system according to the present invention is readily scalable.

**Figure 2** represents generally a diagram of an embodiment of the system according to the invention. The system comprises two main types of modules: an intermediate processor (10) and a connector, in particular, a first connector (111) and a second connector (211).

The intermediate processor (10) is a machine that all computers connected to the internet can "see", but to which only those that are properly pre-admitted and configured in the system can connect.

The connectors can be desktop computers, physically installed on the premises of participating partners. They need, on the one hand, to be able to "talk" to the local Identity Management Provider, to send and receive passenger data, and, on the other hand, to have access to the internet, in order to "talk" to the intermediate processor (10).

As mentioned above, each connector is deployed locally into the journey locations, i.e., the first connector (111) is deployed locally at the origin of a journey and the second connector (211) is deployed locally at the destination of a journey. Sites such as airports or border forces for example, are origin and/or destination locals. A centralized intermediate processor is the other main type of module of the present invention.

Each connector, either a first connector (111) or a second connector (211), handles all the local communications to and from the local Identity Management Provider installed, respectively, in an origin identity management platform (origin IMP) (11) and in a destination identity management platform (destination IMP) (21), as well as ensuring the data that is to be shared with one or more locations is secured. The local Identity Management Provider installed in the origin IMP (11) may be different from the one installed in the destination IMP (21) at the destination. For example, an origin IMP (11) can be an airport gate able to capture biometric and other data from a traveller, or it can be an interface to identify a traveller at a train station.

The intermediate processor is tasked with having a single and centralized source of truth, with regards to connectivity, commercial agreements, and each individual configuration.

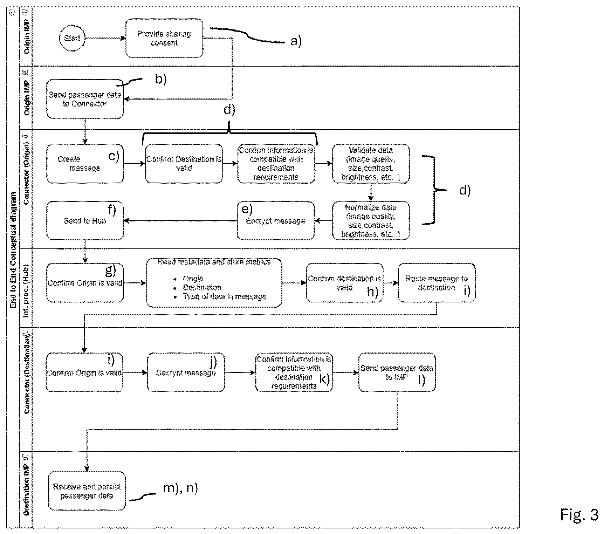

Referring now to Figure 2 and Figure 3 in combination, wherein Figure 2 represents an embodiment of the system according to the invention and Figure 3 represents the main steps of the computer-implemented method according to the invention, each one of the main modules will be described.

### First connector (111) and second connector (211)

An on-premises solution based on a computer program bridges the existing Identity Management Platform (11, 21) with the centralized intermediate processor (10). Each connector (111, 211) is tasked with all communication with each local Identity Management Provider, as well as ensuring the encryption of the data to be exchanged. For this to happen, a crucial requirement is the compatibility of the data exchanged. For example, if the destination requires fingerprint and photograph of the traveller as mandatory data, the origin must support fingerprint and photograph at least, such that data will be accepted by the destination and delivered.

The main functions of each connector (111, 211) can be summarized as follows:
a. It is the entry point to the system according to the invention for Identity Management Platforms (for example, the Vision-Box ^{®} Seamless Journey Platform^{®});
   i. Such platforms can inform the connector about travellers that wish to have their identification data shared with other locations
b. Receives messages from other origins and decrypts them
c. Passes the passenger information received to the local Identity Management Platform (11, 21)
d. Connectivity rules validation
   i. Validates data compatibility between the origin and the destination
   ii. Identifies addressees for each message
   iii.Validates agreement status with each addressee
e. Security
   i. Manages own Security credentials
   ii. Receives secured passenger data, routed from the intermediate processor (10)
   iii. Deciphers received passenger data using own private key
f. Biometric Data Management
   i. Performs data validation for data from untrusted sources
   ii. Performs data normalization for data from untrusted sources. Examples of this type of data are image quality, contrast, size, brightness, etc.

### The intermediate processor (10)

This is the entity through which all messages will be routed to the proper destination as well as keeping information about the meta-data from each message, so to support the creation of Key Performance Indicators (KPI), metrics and Billing information.

The intermediate processor (10) serves the purpose of centralizing the information and reducing the complexity of the overall system. This is possible as there will be one single connection from each Connector to the intermediate processor. This reduces the system complexity from [(N-1)×N]/2 (all to each one of the others) to N, in terms of connections while at the same time increases security, reduces risk as well as the complexity and cost of the system.

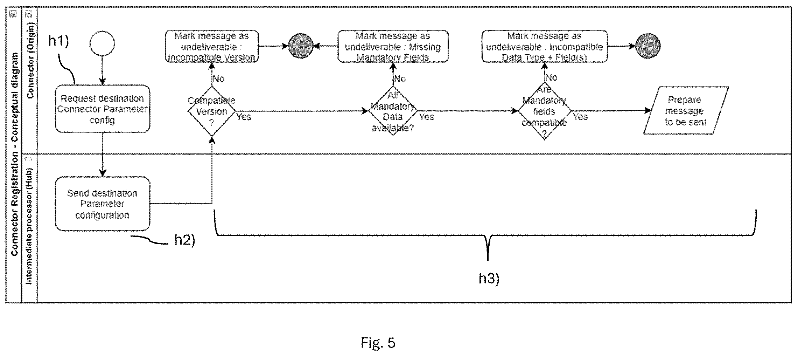

The main functions of the intermediate processor (10) are as follows:
a. Partner management
   i. Centralized location to enrol new entities to the platform This process is based in configuring a new location, where the intermediate processor will accept connections from. It also entails the definition of valid recipients of data from this connector, as well as configuring in other connectors, this new location as a valid recipient for their messages.
   ii. Partner management and agreement status Update the network of valid origins and destinations for a given Connector.
b. Validation (Figure 5)
   i. Verifies meta-data against destination configuration
   ii. Validates origin and destination agreement status
c. Routing
   i. Centralized location to route message
   ii. Ensures messages are sent to proper destination only
d. Billing and metrics
   i. Keeps message metadata (Origin, destination, type of biometric data, date and time of sending, date and time of reception confirmation, delivery status)
   ii. Keeps base information for metrics and billing information
e. Connector link status monitoring
   i. Monitoring
   ii. Monitor overall system performance
   iii. Early alert for potential connectivity problems Each individual connection will be monitored for latency, response time, number of errors, type of errors (connection / processing).

The steps of the computer-implemented method hereinabove summarized can be described as follows, wherein the letters assigned in Figure 3 are identified below:
a) enrolment of a traveller at an origin IMP (11), through a traveller enrolment device (12), wherein enrolment comprises providing traveller data including biometric identification and a travel destination, to the origin IMP (11);
b) origin IMP (11) sends traveller data to a first connector (111);
c) first connector (111) creates a message containing the traveller data;
d) first connector (111) receives requirements of the destination IMP and confirms that information in traveller data is compatible with the requirements of the Identity Management Provider of the destination;
e) first connector (111) encrypts the message created in the step c);
f) first connector (111) establishes connection with an intermediate processor and sends encrypted message to the intermediate processor (10);
g) the intermediate processor (10) confirms the message origin;
h) the first connector (111) and the the intermediate processor (10) confirm the destination ;
i) the intermediate processor (10) establishes a connection with a second connector (211), receives a local configuration of the second connector (211) and sends the message to a second connector (211) associated with the destination;;
j) the second connector (211) decrypts the message;
k) the second connector (211) confirms that traveller data is compatible with destination requirements of destination IMP (21), wherein this confirmation comprises verifying that the biometric identification received conforms to the local configuration of the second connector (211);
l) second connector (211) sends traveller data to the destination IMP (21);
m) the destination IMP (21) receives traveller data; and
n) traveller is identified according to their biometric identification at the destination IMP (21);
wherein the destination is either an intermediate destination or a final destination.

In step h) the intermediate processor (10) will only read Metadata, describing the type of data included in the message. Each different type of data is included in a field of data, wherein there are certain fields of data which are mandatory to be filled in and compatible between first and second connectors, and other fields of data may be optional.
The metrics to be stored are related to locations (origin and destination), timestamps and type of data present in the message. E.g. In the "Document Biometrics" section, the fields category and source are stored.

In step i) the first connector receives a message acknowledgement, reporting that the intermediate processor (10) has received it. The intermediate processor (10) performs the same validations as the first connector (111), about data compatibility between first connector (111) and destination. The data compatibility validations are described in relation to Figure 5 below, substeps h1), h2) and h3). Although redundant on a normal process, it is a best practice for security reasons, on a zero-trust approach.

Step k) describes a similar approach to the first connector (111) and intermediate processor (10) validations. Although the message was received, and supposedly the data compatibility has been confirmed by origin first connector (111) and intermediate processor (10), the second connector (211) should confirm that the data received is compatible with the local Identity Management Provider specifications. This is done by verifying the data received against the local configuration, i.e., the configuration at the destination location (which has also been shared with the intermediate processor (10), when the connection was established between the second connector (211) and the intermediate processor (10).

In step n) once the data is within the destination IMP (21), the passenger can be identified as if he/she had enrolled at that location, i.e., the destination.

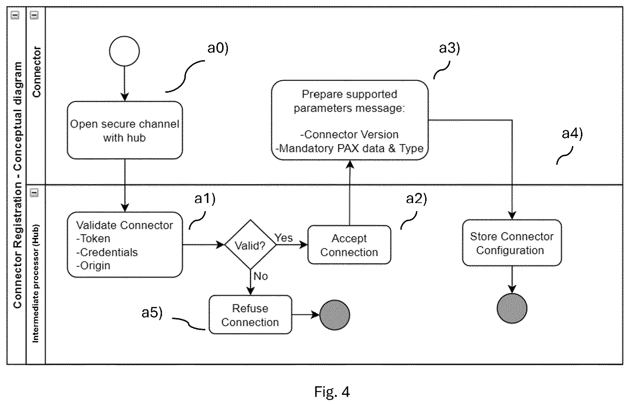

**Figures 4** **and** **5** represent flow charts of, respectively, the steps of a connector setup upon registration in the intermediate processor (10) and validation of data compatibility with the destination.

In particular, the steps of the method according to the invention for the connector setup upon registration in the intermediate processor (10) are the following:
a0) the first connector (111) and/or the second connector (211) open(s) a secure communication channel with the intermediate processor (10);
a1) the intermediate processor (10) validates the first connector (111) and/or the second connector (211) through a validation means;
a2) the intermediate processor (10) accepts connection with the first connector (111) and/or with the second connector when validation of step a1) is successful;
a3) the first connector (111) and/or the second connector (211) prepare supported parameters first configuration and/or supported parameters second configuration, wherein examples of such supported parameters are the software versions of the first connector (111) and the second connector (211), mandatory data available and compatible mandatory fields;
a4) the first connector (111) and/or the second connector (211) send(s) supported parameters first configuration and/or supported parameters second configuration to the intermediate processor (10) and the intermediate processor (10) stores, in an embedded database, the configuration/accepted parameters for each location, that is, supported parameters first configuration and/or supported parameters second configuration;
a5) the intermediate processor (10) rejects connection with the first connector (111) and/or the second connector (211) when validation of step a1) is not successful for the first connector (111) and/or the second connector (211), respectively;
wherein steps a0) to a5) are performed for the first connector (111) and/or the second connector (211) whenever the first connector (111) and/or the second connector (211) are connected to the intermediate processor (10).

More specifically, concerning step a0), whenever a connector establishes a connection to the intermediate processor (10), it shares its local configuration (required and optional parameters, quality thresholds, software version, etc...) . Whenever a message is to be sent to a specific destination or second connector (211), the origin connector or first connector (111) inquires the intermediate processor (10) for the destination configuration, and validates it against its own capabilities. E.g.: If destination requires fingerprint and origin does not support fingerprint, then the data will not be accepted by the destination and it is considered "Undeliverable".

Concerning step a1), the intermediate processor (10) validates first connector (111) and/or second connector (211) through a validation means by using, for example, token, credentials, origin and/or identity, against a trusted identity provider.

In respect to step a3), first connector (111) and/or second connector (211) prepare supported parameters first configuration and/or supported parameters second configuration, which can be, for example, connector version, mandatory traveller's data & type of data, local configuration, required and optional parameters, quality thresholds, software version).

In relation to **Figure 5****,** it represents the steps of an embodiment according to the method of the invention for the validation of data compatibility with destination, the following steps are carried out:
h1) request, sent by first connector (111) to intermediate processor (10), of supported parameter second configuration;
h2) sending, by intermediate processor (10) to first connector (111), of supported parameter second configuration;
h3) if supported parameter second configuration's version is compatible; the first connector (111) checks whether all mandatory information is present, and,
if so, the first connector (111) checks whether all mandatory fields are compatible, and, if so, the first connector (111) prepares a message and sends it to the intermediate processor (10). If any of these checking actions proves not successful, the first connector (111) marks the message as undeliverable.
Still concerning the step h3), a software compatibility action is performed, for example, through the software versions (e.g. a connector requiring software version 2.0 cannot receive data sent by a connector running version 1.0).

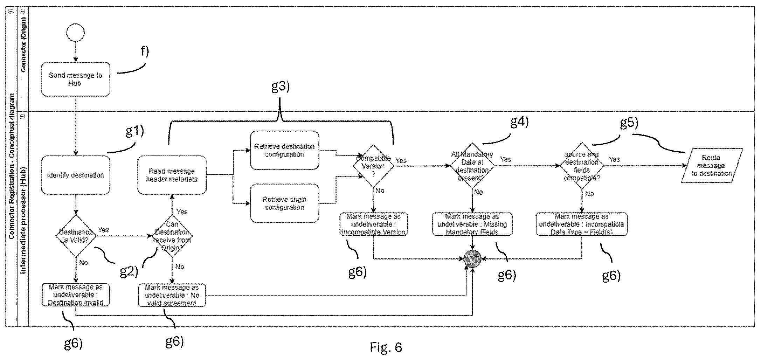

**Figure 6** represents the steps of an embodiment according to the method of the invention for the message validation in the intermediate processor, prior to sending the message to the second connector (211). The following steps are carried out:
g1) identify destination of message, that is, second connector (211) by the intermediate processor (10);
g2) if second connector (211) is valid, wherein being valid is confirmed through the presence and active state of connectivity between source and intermediate processor as well as intermediate processor and destination, software versions are compatible, confirmation, by the intermediate processor (10), that such second connector (211) can receive traveller identification information from respective origin, that is, the first connector (111);
g3) intermediate processor (10) reads message header metadata, retrieves from the database supported parameters second configuration and supported parameters first configuration and checks compatibility of their versions;
g4) if compatibility is present, the intermediate processor (10) checks whether all mandatory data related to the second connector (211) is present;
g5) if all mandatory data is present, the intermediate processor (10) checks the compatibility of supported parameters first configuration fields with supported parameters second configuration fields and sends message to destination second connector (211);
g6) if any one of the following: second connector (211) is invalid, second connector (211) cannot receive travellers from first connector (111), incompatible versions of supported parameters first configuration and supported parameters second configuration, mandatory data missing at second connector (211), supported parameters first configuration fields and supported parameters second configuration fields are not compatible, intermediate processor (10) marks the message as undeliverable.

### Data

Throughout this document, when data is mentioned in relation to the traveller's or passenger's data, the data that will be shared is the data required for passenger enrolment. As there is no standard for enrolment, this means that the information collected at an origin might not be exactly the same as the one required at the destination.

Different biometric engines, rules and thresholds of different IMPs pose a challenge to the system of the invention. It is then required to ensure that data is only shared where both origin and destination are compatible, and that there is data standardization ensuring a chain of trust in the exchanged data. Table 1 below shows the data included:

**Table 1 - Data related to the traveller shared at the passenger enrolment**

| **Data family** | **Details** |
|---|---|
| Boarding Pass Data | Barcode Type |
| | Format Code |
| | Passenger Name |
| | Ticket Type (electronic/physical) |
| Boarding pass legs | Carrier PnrCode |
| | Original airport |
| | Destination airport |
| | Carrier designation |
| | Flight number |
| | Flight day of year |
| | Compartment code |
| | Seat number |
| | Sequence number |
| | Passenger status |
| | Airline numeric code |
| | Document serial number |
| | Frequent flyer number |
| | Frequent flyer Airline Designator |
| | Leg Order |
| Documents | docKey |
| | Issuer state |
| | Document number |
| | Document type |
| | Document expiration date |
| | Optical MRZ (Machine-Readable Zone) |
| | Chip MRZ (Machine-Readable Zone) |
| | Nationality |
| | Surname |
| | Given Name |
| | Date of Birth |
| | Gender |
| | Creation Date |
| Document Biometrics | Category |
| | Position |
| | Source |
| | Encoded data |
| | Content source |
| | Image type |
| | Data format |
| Document Scans | Scan type |
| | Encoded data |
| LiveCapturedBiometrics | Category |
| | Position |
| | Source |
| | Data format |
| | Encoded Data |
| | Image type |
| | Content source |
| Accepted Terms and conditions | Status |
| | Version |

Data in the section of LiveCapturedBiometrics will go through the validation and standardization process, so that the output is a normalized to the corresponding industry standard in ISO 19794.

### Security

On top of the components depicted in the system according to the invention, there is also a Security Manager, which will be tasked with issuing, revoking and assigning Security credentials. Such Manager is not part of the invention and a skilled person in the art will be familiar with the concept. However, it will be briefly described.

The Security Manager will be provided by a Certification Authority, a third party that is certified independently and trusted for such responsibilities.

The first connector (111) and the second connector (211) according to the invention will communicate with such third party, in order to get the proper certificates to sign and cypher or decipher each message that is communicated through the system according to the invention.

Security is ensured by end-to-end encryption at two levels: Message and Transport.

For message encryption, an asymmetric cypher is to be used, ensuring that only the proper addressee will be able to retrieve the contents.

For transport security, a secure channel is to be used, such as SSL (Secure Socket Layer) or TLS (Transport Layer Security). This will add a security layer, by ensuring that the transmission channel is also secure.

The first connector (111) or the second connector (211) of the invention will encrypt the message with the public key of the proper addressee, and only the proper recipient of the message is able to decrypt it. The message is then transmitted to the intermediate processor (10) (see step g) of the method according to the invention) using a secure channel, and the intermediate processor (10) will relay the message to the proper destination, using also a secure channel of the method according to the invention).

To increase security and resiliency, each security set of credentials will be short-lived. On top of it, each recipient will have its own pair of public and private keys. This means that any breach in a certificate will quickly become obsolete, as it will be invalidated. Additionally, the ability to invalidate a single certificate for a specific recipient, ensures that if a location becomes compromised, only that location will be affected.

Security can quickly be re-established, by invalidating and creating a new set of credentials, just to that single location. This adds a layer of resilience to the system, as no other locations are impacted.

Within the message sent, there is also information that is natively secured, such as identification data, can be validated at any moment at the destination, as it is secured according to the ICAO (International Civil Aviation Organization) model.

### System Main Flow

In the following a summary of the flow within the system according to the invention will be briefly described:
Given the security stages described above, there are a number of operations that ought to be executed, so that the system behaves as expected.

At the origin, the first connector (111), upon receiving Passenger Data from the local Identity Management platform, will, for each destination:
1) Create the message header using meta-data only (step c))
   a. This meta-data is used for statistics and validation at the intermediate processor (10)
   b. Meta-data only identifies which sort of information is within that message body
2) Retrieve the security credentials for the destination (step d))
3) Cypher the passenger data with the destination security credentials (step f))
4) Send the message to the intermediate processor (10) (step f)).

Upon reception of a message from a first connector (111), the intermediate processor (10) will:
1) Confirm to the first connector (111) proper reception of the message (step g))
2) Look into the meta-data and (step h))
   a. Check compatibility with destination
   b. Store statistical data
3) Identify the proper destination (step i))
4) Send the message to the destination (step j))

In turn the second connector (211) at the destination or receiving end will, upon message reception:
1) Acknowledge the reception to the intermediate processor (10))
2) Use its own privacy credentials to decipher the message (step j))
3) Hand the passenger data to the local Identity Management platform (21) (step l))

### API - Application Programming Interface

Even though the operation of an API is known to the skilled person, its particular application in the present invention will be briefly discussed.

Given that the target Identity Management Provider can be any system from any provider, there is the need to decouple the system of the present invention solution specificities, from the local implementation. The Identity Management Provider runs in the respective Identity Management Platform, which can be located in an airport, a border force, an airline, a seaport, for example. The decoupling of the system can be achieved by defining a common language and process to communicate to and from the system of the present invention ecosystem. This is the role of API: To provide a standardized way for external systems to interact with the system of the present invention, without having the need to understand all the details of the system of the present invention.

In order to cope with such a diversity of platform, a connector (a first connector (111) and/or a second connector (211)) at each location is provided, which is able to translate information to and from the system of the present invention, through this interface, that is the API.
The connector defines the API structure for the type of data, the data itself, and which fields are mandatory and which ones are optional with regards to Passenger identity, journey details and sharing consent.

Given the variety of distinct platforms with distinct rules, some customization is expected to be required to be performed by the Identity Management Platforms (21) at receiving end, so that they can receive the Passenger information from the second connector (211), according to the defined API.

### Message traceability

The system according to the invention incorporates a feedback process, that allows traceability with regards to the message delivery status, as well as to provide resiliency to the solution and ability to recover from temporary unavailability of the recipient.

There are 2 main traceability points:

### 1) At the first connector (111) - Origin connector

a. Is only concerned about understanding if the intermediate processor (10) has received the message properly.
b. intermediate processor (10) only needs to reply back with an acknowledgement of the message.

### 2) At the centralized intermediate processor (10)

a. Has information about successfully delivered message to destination, success in message deciphering, as well as if the message has been sent to local Identity Management Platform (21).

The reason to have this level of information within the intermediate processor (10) is so that it is possible to detect abnormal situations, such as messages being sent to the wrong location, expired or invalid security credentials, or even configuration mismatches.

### Business Rules Validation

This is the module tasked with ensuring that local rules and policies are defined. Each location defines its own rules, such as which information is accepted and any applicable restrictions (e.g.: accept face biometrics only in conjunction with a digital citizen card).

The validation of Business rules aims at reducing the number of unsuccessful messages within the system.

The validation is made in two locations:

### 1.At the first connector (111):

The first connector (111) requests the destination configuration to the intermediate processor (10) (step d), who should have stored the relevant rules for each element present in the system. This configuration may contain accepted data, data types, biometric type(s) and respective thresholds, mandatory fields, software versions, or any combination thereof.

If the data available is not compatible with the destination, then the message is marked as undeliverable (step h3)), with the corresponding reason.

Availability of valid routes is another step of the validations. If for any reason there is no agreement between the two locations, the first connector (111) stores locally this information, for Analytics, and reports it to the intermediate processor (10).

### 2.At the intermediate processor (10):

As the whole system is based on a zero-trust approach. To maximize security, the same rules are validated in the intermediate processor (10) for any incoming request, and the results are also stored, for analytical purposes.

### Biometric Data Management

Given the amount of distinct biometric engines and rules, the distinct thresholds and data quality, it is a challenge to correlate the metrics on two distinct engines.

Standardization means that for the same input data, the output results ought to be the same, regardless of the processing engine.

The first step (step e)) needs to be data standardization: ensuring the same orientation, size, levels, and base image is used, removes one of the variables that brings challenges to this data exchange.

The second step, and to avoid changing the biometric engine, is to use a pattern or perform a calibration by similarity. (step e)) This works by having a common biometric engine processing the same data, and tweaking each local biometric engine so that the output is the same, or at least very similar, to the output on the common biometric engine. In other words, this calibration is performed by using one reference engine (the common biometric engine) and evaluating the output for each input. Then comparing this output from the reference engine with the output for each location. With this calibration matrix, for both source and destination, using a third engine as a reference, is what allows to adjust the output of distinct biometric engines to be similar for the same input. This will ensure that biometric results are at least compatible between distinct solutions, and data (and results) are safely exchanged between them.

This is another advantage of the present invention, by providing a biometric engine that can be used to calibrate distinct biometric engines, so that the results provided by one engine are valid on a distinct one.

### Administration Application

The administration application is the software solution that runs in the intermediate processor (10) to perform administration activities, such as adding a new connector and respective details, or managing a connection to a specific location. The new connector registration is described in relation to Figure 4, substep a4) of the method according to the invention. The configuration data of each new connector, which may act as a first connector (111) or as a second connector (211), depending on whether the connector is located at the origin or at the destination, wherein said configuration-related data is stored in the intermediate processor (10). It is also the location where information about message delivery status is centralized.

There are two components on this solution:

### 1.General administration

This allows the provider of the solution to add/remove partners, manage the allowed origins and valid destinations for each individual partner.

It also allows the triggering of the process to revoke and issue new security credentials for a given partner. It allows a general overview of the system health, as well as details and statistics for each individual partner.

### 2.Partner Administration

This is a location where each partner is able to view its own individual statistics and metrics, trigger the process to revoke/issue new certificates for himself, or to enable/disable communications with a given entity within the system of the invention.

### Message Status Traceability

Another particularity of the system is the ability to understand the delivery status of each message sent in the system. This allows resilience, delivery assurance and traceability throughout the entire system.

Given the solution architecture, the intermediate processor (10) will preferably only be able to track the message status after it has been received. This means that there will be status that are only visible at the first connector (111), i.e., the origin connector. Once delivered to the intermediate processor (10), all subsequent statuses are tracked at the intermediate processor (10).

Table 2 contains the statuses at the first connector (111), origin connector, and their meaning.

**Table 2 - Message status at the first connector (111)**

| **State** | **Meaning** | **Type** |
|---|---|---|
| Waiting to be sent | Message is in the Connector, but not yet sent. | In transit |
| Sent, pending confirmation | Message sent to destination through the intermediate processor. Intermediate processor has not yet confirmed reception. | In transit |
| Retry Sending | Message sent to destination through the intermediate processor. The intermediate processor has not confirmed reception and the time to receive the acknowledge has expired. Will be retried later. | In transit |
| Unable to Send | A message in this stage means that a message was sent to the intermediate processor, but no confirmation of reception was received. Sending has been retried a predefined number of times, and for each retry, an acknowledge was not received at the connector | Final |
| Delivered to intermediate processor | A message was sent to a destination, through the intermediate processor, and the intermediate processor confirmed its reception back to the connector. | In transit |

Table 3 contains the statuses tracked in the intermediate processor (10) and respective meaning.

**Table 3 - Message status tracked in the intermediate processor (10)**

| **State** | **Meaning** | **Type** |
|---|---|---|
| Waiting to be sent | Message has been received in the intermediate processor, and is waiting to be sent to proper destination. | In transit |
| Sent, pending confirmation | Message sent to destination by the intermediate processor, but acknowledge by the destination has not yet been received. | In transit |
| Retry Sending to destination | Message sent to destination. Intermediate processor has not received reception confirmation from destination, and the time to receive the acknowledge has expired. Will be retried later. | In transit |
| Unable to Deliver | A message in this stage means that the message was sent to the destination, but no confirmation of reception was received. Sending has been retried a predefined number of times, and for each retry, an Acknowledge was not received at the intermediate processor | Final |
| Delivered to destination | A message was sent to a destination, and the intermediate processor confirmed its reception back to the connector. | In transit |
| Unable to decipher | Message was delivered to the destination connector, but the connector could not decipher the message. | Final |
| Sent to IMP | Message sent to destination IMP but acknowledged by IMP has not yet been received. | In transit |
| Delivered to IMP | Message delivered to destination IMP and acknowledgement by IMP has been received at the second connector (211) | Final |

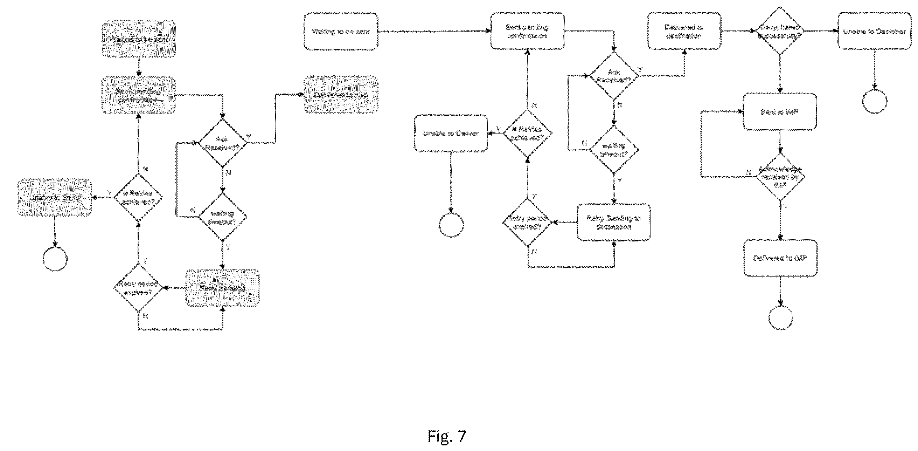

**Figure 7** shows a logical sequence diagram that illustrates the sequence of states for the messages, where the statuses with a shadowed background are visible at the origin connector. All the other statuses can be seen in the intermediate processor.

### Metrics and Analytics

This module is the foundation for all monitoring. Analytics allow the system to alert for changes in normal behaviour, trigger alerts around potential problems on a given location. Whether a link that is showing problems, a wrong configuration that is delivering messages to the wrong location, or even an abnormal flow of data, all this valuable information is understandable if analytics are in place.

This module is run in the intermediate processor (10).

The system will allow to gather the following metrics:
- Volume of messages sent by a given origin, i.e., a given first connector (111)
- Volume of messages targeted at a given destination, i.e., a given second connector (211)
- Volume of messages targeted at a given destination, i.e., a given second connector (211), from one or more sources, i.e., one or more first connectors (111)
- For each of the above, the distribution throughout the day, the week, month and year
- Time a message spent in transit
- Average transit time between a given source, i.e., a given first connector (111), and specific destination, i.e., a specific second connector (211)

### Logging

Logging is a part of the system reliability, for either traceback a message flow or to understand the root-cause for an error that has been reported by the system, as for example, an undeliverable message, routing problems or technical errors.

This invention is by no means restricted to the embodiments described in this document, and a person skilled in the art can envision many possibilities for modifying it and replacing technical features with equivalent ones, depending on the requirements of each situation, as defined in the appended claims.

Throughout this application, the term "Certification Authority" on the Internet refers to a trusted third party that issues digital certificates, validating the authenticity of the associated public keys and thereby enabling secure communication through encryption and digital signatures.

Throughout this application, the term "Partners" refers to an Identity Management Provider, installed in a local identity management platform, associated to a connector registered in the system.

The subject-matter above-described is provided as an illustration of the present invention and shall not be interpreted as limiting it. The terminology used with the purpose of describing specific embodiments according to the present invention, shall not be interpreted as a limitation of the invention.

All changes and modifications, as long as they do not modify the essential characteristics of the following claims, must be considered within the scope of protection of the present invention.

## Claims

1. A computer-implemented method for enabling biometric configurations to be recognised between an origin identity management platform (origin IMP) and a destination identity management platform (destination IMP) comprising:
a) a traveller enrolment device (12) enrolling a traveller at an origin IMP (11) associated with the origin, wherein enrolment comprises providing traveller data including biometric identification and a travel destination, to the origin IMP(11);
b) the origin IMP (11) sending traveller data to a first connector (111);
c) the first connector (111) creating a message containing the traveller data;
d) the first connector (111) receiving requirements of the destination IMP and confirming that the traveller data is compatible with the requirements;
e) the first connector (111) encrypting the message;
f) the first connector (111) establishing a connection with an intermediate processor (10) and sending the encrypted message to the intermediate processor(10);
g) the intermediate processor (10) confirming the message origin;
h) the first connector (111) and the intermediate processor (10) confirming the destination;
i) the intermediate processor (10) establishing a connection with a second connector (211), receiving a local configuration of the second connector (211) and sending the message to a second connector (211) associated with the destination;
the second connector (211) confirming the message origin;
j) the second connector (211) decrypting the message;
k) the second connector (211) confirming that the traveller data from the message is compatible with destination IMP (21) requirements, wherein this confirmation comprises verifying that the biometric identification received conforms to the local configuration of the second connector (211);
l) the second connector (211) sending traveller data to the destination IMP (21);
m) the destination IMP (21) receiving the traveller data; and
n) identifying the traveller according to their biometric identification at the destination IMP (21).

2. The computer-implemented method according to the precedent claim **characterized in that** the method comprises the following additional steps:
a0) the first connector (111) and/or the second connector (211) opening a secure communication channel with the intermediate processor (10);
a1) the intermediate processor (10) validating the first connector (111) and/or the second connector (211) through a validation means;
a2) the intermediate processor (10) accepting connection with first connector (111) and/or with second connector when validation of step a1) is successful;
a3) the first connector (111) and/or the second connector (211) preparing supported parameters first configuration and/or supported parameters second configuration;
a4) the first connector (111) and/or the second connector (211) sending supported parameters first configuration and/or supported parameters second configuration to the intermediate processor (10) and the intermediate processor (10) storing it locally to retain the supported parameters configuration for the first connector (111) and/or the second connector (211);
a5) the intermediate processor (10) rejecting connection with the first connector (111) and/or the second connector (211) when validation of step a1) is not successful for the first connector (111) and/or the second connector (211);
wherein
steps a0) to a5) are performed for the first connector (111) and/or the second connector (211) whenever the first connector (111) and/or the second connector (211) are connected to the intermediate processor (10).

3. The computer-implemented method according to any one of the precedent claims **characterized in that** step h) of validity of destination confirmation by the intermediate processor (10) comprises the following additional substeps:
h1) request, sent by first connector (111) to the intermediate processor (10), of destination supported parameter second configuration;
h2) sending, by the intermediate processor (10) to the first connector (111), of destination supported parameter second configuration;
h3) if supported parameter second configuration's version is compatible, the first connector (111) checking whether all mandatory information is present, and,
if so, the first connector (111) checking whether all mandatory fields are compatible, and,
if so, the first connector (111) preparing a message and sending it to the intermediate processor (10);
if any one of these checking actions proves not successful, the first connector (111) marking the message as undeliverable.

4. The computer-implemented method according to any one of the precedent claims **characterized in that** step g) of confirmation of validity of the message origin by the intermediate processor (10) comprises the following additional substeps:
g1) identifying destination of message, that is, second connector (211) by the intermediate processor (10);
g2) if the second connector (211) is valid, wherein being valid is confirmed through the presence and active state of connectivity between source and destination, software versions are compatible, confirming, by the intermediate processor (10), that such second connector (211) is able to receive traveller identification information from the respective origin, that is, the first connector (111);
g3) the intermediate processor (10) reading message header metadata, retrieving the supported parameters second configuration and the supported parameters first configuration and checking compatibility of their versions;
g4) if compatibility is present, the intermediate processor (10) checking whether all mandatory data related to second connector (211) is present;
g5) if all mandatory data is present the intermediate processor (10) checking the compatibility of the supported parameters first configuration fields and supported parameters second configuration fields and sending message to destination second connector (211);
g6) if any one of the following: second connector (211) is invalid, second connector (211) cannot receive travellers from first connector (111), incompatible versions of supported parameters first configuration and supported parameters second configuration, mandatory data missing at second connector (211), supported parameters first configuration fields and supported parameters second configuration fields are not compatible, the intermediate processor (10) marking the message as undeliverable.

5. The computer-implemented method according to any one of the precedent claims **characterized in that** supported parameters first and second configurations are selected from the group consisting of: biometric models for fingerprint, eye iris, or facial recognition.

6. A system for enabling biometric configurations to be recognised between an origin identity management platform (Origin IMP) and a destination identity management platform (destination IMP), configured to implement the method according to any one of claims 1-5, **characterized in that** the system comprises:
a traveller enrolment device (12);
at least one origin IMP (11);
at least one first connector (111);
an intermediate processor (10);
at least one second connector (211);
at least one destination IMP (21);
wherein
the origin IMP (11) is placed at an origin of a traveller's journey and the destination IMP (21) is placed at a destination of a traveller's journey; and
wherein
the traveller enrolment device (12) is configured to communicate in a wired or wireless manner with the at least one origin IMP (11), which in turn is configured to communicate in a wired or wireless manner with the at least one first connector (111), which in turn is configured to communicate in a wired or wireless manner with the intermediate processor (10), which in turn is configured to communicate in a wired or wireless manner with the at least one second connector (211), which in turn is configured to communicate in a wired or wireless manner with the at least one destination IMP (21).

7. The system according to the preceding claim, **characterized in that** the intermediate processor (10) is selected form the group consisting of: desktop computer, server, laptop computer, wherein the intermediate processor (10) is configured to be accessed from any other computational unit of the system.

8. The system according to any one of claims 6-7, **characterized in that** the at least one first connector (111) and the at least one second connector (211) are selected from the group consisting of: desktop computer, laptop computer, tablet, smartphone, server.

9. A computer program product **characterized in that** it comprises logical instructions which, when the program is executed by a computer selected from the group consisting of the intermediate processor (10), the at least one first connector (111), the at least one second connector (211) of the system as defined in any one of claims 6-8, cause the computer to carry out the method of any one of claims 1-5.

10. A computer-readable medium **characterized in that** it comprises instructions which, when executed by a computer selected from the group consisting of the intermediate processor (10), the at least one first connector (111), the at least one second connector (211) of the system as defined in any one of claims 6-8, cause the computer to carry out the method of any one of claims 1-5.
